# EUROPEAN PATENT APPLICATION

(11) **EP 4 746 517 A1**
(43) Date of publication of application: **20.05.2026**
(21) Application number: 24851070.3
(22) Date of filing: 07.08.2024
(51) Int. Cl.: H04W 36/00

(54) **CELL HANDOVER METHOD AND RELATED APPARATUS**

(30) Priority: 10.08.2023 CN 202311014190
(71) Applicant: Huawei Technologies Co., Ltd., Shenzhen, Guangdong 518129 (CN)
(72) Inventor: TIAN, Yang, Shenzhen, Guangdong 518129 (CN); CHAI, Xiaomeng, Shenzhen, Guangdong 518129 (CN); SUN, Yan, Shenzhen, Guangdong 518129 (CN)
(74) Representative: MERH-IP Matias Erny Reichl Hoffmann Patentanwälte PartG mbB
(86) International application number: PCT/CN2024/110503
(87) International publication number: WO 2025/031425

(57) **Abstract**

This application provides a cell handover method and a related apparatus used in the communication field. In technical solutions provided in this application, after obtaining, from at least one sensing device, at least one sensing result and a sensing type of each sensing result in the at least one sensing result, a decision device determines a cell handover policy of a terminal device based on a cell handover decision function associated with at least one sensing type that is in one-to-one correspondence with the at least one sensing result. According to the technical solutions of this application, provided that the decision device obtains the sensing result of the sensing type associated with the cell handover decision function, the decision device can obtain the cell handover policy based on the sensing result and the cell handover decision function, thereby improving efficiency of obtaining the cell handover policy, reducing a delay of obtaining the cell handover policy, and further reducing a cell handover delay of the UE.

## Description

This application claims priority to Chinese Patent Application No. 202311014190.8, filed with the China National Intellectual Property Administration on August 10, 2023 and entitled "CELL HANDOVER METHOD AND RELATED APPARATUS", which is incorporated herein by reference in its entirety.

### TECHNICAL FIELD

This application relates to the field of communication technologies, and in particular, to a cell handover method and a related apparatus.

### BACKGROUND

In communication systems, for example, in a 5th generation (5th generation, 5G) system, a user equipment (user equipment, UE) usually needs to perform cell handover, to improve performance of transmission between the UE and a radio access network (radio access network, AN) device.

However, in an existing cell handover procedure, a cell handover delay of the UE is long.

### SUMMARY

This application provides a method, an apparatus, and a system, to implement cell handover of a UE, so as to reduce a cell handover delay of the UE.

According to a first aspect, this application provides a cell handover method. The method includes: obtaining at least one sensing result and at least one sensing type corresponding to the at least one sensing result, where the at least one sensing type is a sensing type of each sensing result in the at least one sensing result; and determining a cell handover policy based on a cell handover decision function associated with all or a part of the at least one sensing type, where an input of the cell handover decision function is a sensing result of all or the part of the sensing type, and the cell handover policy includes at least one of the following: performing cell handover on a first terminal device, not performing cell handover on the first terminal device, or a target cell of the first terminal device.

The method may be implemented by a core network device. For example, the method may be implemented by a session management function entity.

The method may alternatively be implemented by an access network device (a network device). For example, the method may be implemented by a radio access network device.

An execution body of this method may be referred to as a decision device.

In this method, the sensing result includes a sensing result obtained by executing a sensing task by a device that can execute the sensing task in a communication network.

The sensing task in this method may include one or more of several elements such as a sensing object, a sensing operation, and a sensing result. The sensing object may be understood as specific information, a specific signal, or specific data on which the sensing operation is performed, the specific information, the specific signal, or the specific data that is input through the sensing operation, or the like. The sensing operation may be understood as a specific operation performed on the sensing object, for example, collection, measurement, or prediction. The sensing result may be understood as an output obtained through the sensing operation.

Optionally, the sensing task may further include a source of the sensing object and/or a sensing device (also referred to as a sensing entity, sensing entity). The source of the sensing object refers to what provides the sensing object, and the sensing device is a device that executes the sensing task.

An example in which the terminal device measures a sensing reference signal sent by the network device is used. The terminal device is the sensing device, the network device is the source of the sensing object, the sensing reference signal is the sensing object, measurement is the sensing operation, and a result obtained through measurement is the sensing result.

The sensing task may be measuring the sensing reference signal, and correspondingly, the sensing result may be the measurement result of the sensing reference signal.

The sensing reference signal in this method may be understood as a signal transmitted for implementing sensing. The sensing, as the name implies, means detecting a status of a surrounding environment, and a location, a direction, a height, a speed, and a distance of an object, and the sensing may further be used for checking a shape or a material of the object, or even checking one or more of an action, a gesture, and the like of a person. However, this is not limited thereto, and other content that can be sensed may also be included.

A reference signal used for measurement in conventional technologies may be reused for the sensing reference signal in this method. For example, a reference signal used for cell measurement in the conventional technologies may be reused.

The sensing reference signal in this method may alternatively be a newly defined reference signal other than the reference signal in the conventional technologies. For example, a time frequency resource used for the sensing reference signal in this method is different from one or more of a time domain resource, a frequency domain resource, a sequence resource, and the like used for the reference signal in the conventional technologies.

The sensing task may be specifically that the terminal device measures the sensing reference signal or the network device measures the sensing reference signal. Correspondingly, the sensing result may be a result of measuring the sensing reference signal by the terminal device or a result of measuring the sensing reference signal by the network device.

That the terminal device measures the sensing reference signal may be that the terminal device measures a sensing reference signal sent by the terminal device, the terminal device measures a sensing reference signal sent by the network device, or the terminal device measures a sensing reference signal sent by another terminal device.

That the network device measures the sensing reference signal may be that the network device measures a sensing reference signal sent by the network device, the network device measures a sensing reference signal sent by the terminal device, or the network device measures a sensing reference signal sent by another network device.

The sensing task may be a sensing task executed by a sensor, and correspondingly, the sensing result may be a sensing result of the sensor.

The sensor may be any one of the following: an image sensor, a location sensor, a rainfall sensor, a speed sensor, an acceleration sensor, a gas sensor, or an optical sensor.

The sensing task may be predicting performance of the network device, and correspondingly, the sensing result is a performance prediction result of the network device.

Predicting the performance of the network device may be predicting traffic of the network device, and correspondingly, the sensing result is a traffic prediction result of the network device.

Predicting the performance of the network device may be predicting signal interference of the network device, and correspondingly, the sensing result is an interference prediction result of the network device.

In this method, there may be one or a plurality of obtained sensing results. Among the plurality of obtained sensing results, the plurality of sensing results may be sensing results of sensing tasks of a same type, or may be sensing results of sensing tasks of different types.

For example, when there are two obtained sensing results, one sensing result may be a measurement result obtained by the terminal device from measuring the sensing reference signal sent by the terminal device, and the other sensing result is an image obtained by performing image capture by the image sensor. In this example, the obtained sensing results of the sensing tasks are of different types.

When the plurality of sensing results are the sensing results of the sensing tasks of the same type, the plurality of sensing results are usually results obtained by executing the sensing tasks of the same type by different devices. For example, one terminal device measures a sensing reference signal sent by the terminal device to obtain a sensing result, and another terminal device measures a sensing reference signal sent by the terminal device to obtain a sensing result.

In this method, the sensing type of the sensing result may be associated with one or more of the sensing device of the sensing task corresponding to the sensing result, the sensing object, the source of the sensing object, and the type of the sensing result. In other words, the sensing type of the sensing result may be determined based on one or more of the following information: a type of the sensing device, a type of the sensing object, the source of the sensing object, and a type of the sensing task that are of the sensing task corresponding to the sensing result, and the type of the sensing result.

In an example, the sensing type of the sensing result may be determined based on the type of the sensing device. For example, when the sensing device of the sensing task corresponding to the sensing result is the image sensor, the location sensor, the rainfall sensor, the speed sensor, the acceleration sensor, the gas sensor, or the optical sensor, the sensing type of the sensing result may be determined based on the type of the sensing device. In this case, the sensing type is an image, a location, a rainfall, a speed, an acceleration, a gas concentration, a gas composition, and a light intensity separately.

In an example, the sensing type of the sensing result may be determined based on the type of the sensing result. For example, when the type of the sensing result is a traffic prediction value of the network device or a signal interference prediction value of the network device, the sensing type of the sensing result may be determined based on the type of the sensing result. In this case, the sensing type is the traffic prediction value of the network device or the signal interference prediction value of the network device.

In an example, the sensing type of the sensing result may be determined based on at least one element included in the sensing task corresponding to the sensing result. Optionally, the at least one element may include one or more of the sensing device, the source of the sensing object, the sensing object, and the sensing operation. For example, when the sensing result is signal strength obtained by the terminal device from measuring the sensing reference signal sent by the network device, the sensing type may be the terminal device measuring the sensing reference signal sent by the network device. When the sensing result is signal strength obtained by the terminal device from measuring the sensing reference signal sent by the terminal device, the sensing type may be the terminal device measuring the sensing reference signal sent by the terminal device. When the sensing result is signal strength obtained by the terminal device from measuring the sensing reference signal sent by the another terminal device, the sensing result may be the terminal device measuring the sensing reference signal sent by the another terminal device. When the sensing result is signal strength obtained by measuring by the network device the sensing reference signal sent by the network device, the sensing type may be the network device measuring the sensing reference signal sent by the network device. When the sensing result is signal strength obtained by measuring by the network device the sensing reference signal sent by the another network device, the sensing type is the network device measuring the sensing reference signal sent by the another network device. When the sensing result is signal strength obtained by measuring by the network device the sensing reference signal sent by the terminal device, the sensing type may be the network device measuring the sensing reference signal sent by the terminal device.

In some examples, the sensing type may be determined based on one or more of the sensing device, the source of the sensing object, the sensing object, and the sensing operation included in the sensing task, and the sensing result. For example, when the sensing result is the signal strength obtained by measuring by the network device the sensing reference signal sent by the another network device, the sensing type is the network device measuring the sensing reference signal sent by the another network device to obtain signal strength. In this example, the sensing type determined based on the one or more of the sensing device, the source of the sensing object, the sensing object, and the sensing operation included in the sensing task, and the sensing result may be referred to as the type of the sensing task.

In this method, obtaining a sensing result by the decision device may be implemented in one of the following manners: receiving the sensing result from the sensing device, and executing a sensing task by the decision device to obtain the sensing result. The sensing result may be directly sent by the sensing device to the decision device, or may be forwarded by the sensing device to the decision device via another communication device.

When the decision device obtains a plurality of sensing results, manners of obtaining different sensing results in the plurality of sensing results may be the same or may be different. For example, some sensing results are directly sent by the sensing device to the decision device, and some sensing results are sent by the sensing device to the decision device via the another communication device. For another example, all sensing results are directly sent by the sensing device to the decision device.

In this method, when reporting the sensing result, the sensing device may synchronously report a sensing type of the sensing result. In this case, the decision device may directly learn of the sensing type of the sensing result based on information reported by the sensing device.

Alternatively, when the sensing device reports the sensing result, the sensing type of the sensing result may not be reported, but is determined by the decision device. For example, when the sensing device is a sensor, the decision device may determine the sensing type based on the type of the sensing device.

In this method, when the decision device obtains the plurality of sensing results, methods for obtaining sensing types of different sensing results in the plurality of sensing results may be the same, or may be different.

For example, when the sensing result obtained by the decision device includes a sensing result reported after the image sensor performs image capture and a sensing result reported after the terminal device measures the sensing reference signal sent by the terminal device, the decision device may determine a sensing type of a previous sensing result based on receiving of the previous sensing result from the image sensor, that is, based on a type of the image sensor. The decision device may determine, based on a sensing type indicated by the information reported by the terminal device, the sensing type of the sensing result reported by the terminal.

In this method, a process in which the sensing device obtains the sensing result may be implemented in an artificial intelligence (artificial intelligence, AI) manner, or may be implemented in a non-AI manner.

In an example of implementation of the sensing device in the AI manner, the sensing device may obtain the sensing result by using an AI model. Examples of the AI model may include a deep neural network, and examples of the deep neural network may include a feedforward neural network, a convolutional neural network, a recursive neural network, or the like.

In this method, the decision device can obtain one or more cell handover decision functions, each cell handover decision function is associated with one or more sensing types of sensing results, and the input of the cell handover decision function is usually the sensing result of the sensing type associated with the cell handover decision function. In other words, if the input of the cell handover decision function is a sensing result of a specific sensing type, the cell handover decision function is associated with the sensing type.

In this method, the cell handover decision function may be implemented in the AI manner, or may be implemented in the non-AI manner.

In an example in which the cell handover decision function may be implemented in the AI manner, the cell handover decision function may include an AI model. Examples of the AI model may include a deep neural network, and examples of the deep neural network may include a feedforward neural network, a convolutional neural network, a recursive neural network, or the like.

After inputting the sensing result of the associated sensing type, the cell handover decision function may make a decision based on the input sensing result to obtain the cell handover policy. The cell handover policy includes at least one of the following: performing cell handover on the terminal device, not performing cell handover on the terminal device, or a target cell of the terminal device.

In an example, after inputting the sensing result, the cell handover decision function may check whether cell handover can be performed on the terminal device, and may further output the target cell of the terminal device when determining that cell handover can be performed on the terminal device.

In some implementations, when determining that cell handover cannot be performed on the terminal device, the cell handover decision function may also output the target cell of the terminal device. The target cell may be a same cell as a current serving cell of the terminal device.

In this method, a plurality of cell handover decision functions may be implemented in advance, and different cell handover decision functions in the plurality of cell handover decision functions may be associated with different sensing type sets. Each sensing type set may include one or more sensing types. If a sensing type in one sensing type set is completely the same as a sensing type in another sensing type set, it is considered that the two sensing type sets are the same. In other cases, it is considered that the two sensing type sets are different.

For example, if one sensing type set includes three sensing types: A, B, and C, and another sensing type set includes A, includes B, includes C, includes A and B, includes A and C, or includes B and C, it may be considered that the two sensing type sets are different.

In this method, the decision device searches for the associated cell handover decision function based on the sensing type of the obtained sensing result. That is, the decision device determines the cell handover policy based on the corresponding cell handover decision function based on a quantity of sensing types of sensing results can be obtained currently. Therefore, provided that the decision device obtains the sensing result of the sensing type that can be associated with at least one cell handover decision function, the cell handover policy can be obtained based on the cell handover decision function. When the decision device obtains sensing results of excessive sensing types, the decision device can also determine a cell handover decision based on a cell handover decision function associated with the excessive sensing types. In addition, because a more accurate cell handover decision can be usually obtained based on more sensing results, the method can further improve cell handover accuracy.

In this method, optionally, the decision device may periodically execute the method, or may trigger execution of the method based on an indication of another device.

In this method, after determining the cell handover policy, the decision device may notify the cell handover policy to a terminal device related to the cell handover policy and/or a current serving network device of the terminal device, so that the terminal device and the network device can continue a subsequent cell handover procedure.

In this method, in some implementations, the decision device may send first indication information, where the first indication information indicates a specific sensing device that needs to report a sensing result. In other words, the first indication information indicates specific sensing devices that need to report sensing results.

In an example, the first indication information may carry the type of the sensing device. It indicates that the sensing device of the type needs to report a sensing result. In this way, after receiving the first indication information, the sensing device indicated by the first indication information may report the sensing result.

It may be understood that the first indication information herein may be periodically sent by the decision device, or may be sent by the decision device as triggered by control instructions received from the another device or an administrator.

In an example, a time interval at which the decision device sends the first indication information twice consecutively is usually greater than duration of an interval at which the sensing device reports the sensing result twice consecutively. In other words, in this example, the first indication information notifies the sensing device that after the sensing device detects the sensing result, the sensing result should be reported according to logic or a rule that needs to be followed by the sensing result, instead of being used for triggering the sensing device to send the sensing result.

In some implementations, the method may further include: sending second indication information, where the second indication information indicates a sensing type of a sensing result sent by a first sensing device.

Optionally, the first indication information and the second indication information may be carried in same signaling.

According to a second aspect, this application provides a cell handover method, applied to a first sensing device. The method includes: receiving first indication information, where the first indication information indicates a target sensing device to report a sensing result, and the target sensing device includes at least one sensing device; and when the first sensing device is the target sensing device, sending a sensing result obtained by executing a sensing task by the first sensing device.

In the method, the target sensing device refers to a sensing device that needs to report a sensing result, or a sensing device that should report the sensing result. In other words, after receiving the first indication information, the sensing device may determine, based on the first indication information, which sensing devices need to report sensing results or what sensing devices are; and if the sensing device is the sensing device that needs to report the sensing result and is indicated by the first indication information, the sensing device reports the sensing result obtained by executing the sensing task by the sensing device.

The first sensing device in the method may be any sensing device. In an example, the first indication information includes a type of the target sensing device.

The first sensing device may be a network device, a terminal device, an image sensor, a location sensor, a rainfall sensor, a speed sensor, an acceleration sensor, a gas sensor, or an optical sensor, or may be another device that can execute the sensing task to obtain the sensing result.

In an example, the first indication information may include a type of the target sensing task. The target sensing task may be understood as a sensing task that needs to be executed by the sensing device and for which the sensing result is reported. For example, some sensing devices may execute a plurality of sensing tasks to obtain a plurality of sensing results. In this scenario, a decision device may send the first indication information based on a sensing type of a sensing result needed by the decision device, where the first indication information includes a type of a sensing task corresponding to the sensing result needed by the decision device. In this way, after receiving the first indication information, if the sensing device can execute the sensing task indicated by the first indication information, the sensing device may execute the sensing task and report the sensing result; or if the sensing device does not have a capability of executing the sensing task indicated by the first indication information, the sensing device may ignore the first indication information.

In some possible implementations, the method may further include: sending second indication information, where the second indication information indicates a sensing type of the sensing result sent by the first sensing device.

Optionally, the first indication information and the second indication information may be carried in same signaling.

For related content of the sensing type of the sensing result, refer to the content in the first aspect. Details are not described herein again.

According to a third aspect, this application provides an apparatus. The apparatus may include modules that are in one-to-one correspondence with the methods/operations/steps/actions described in the first aspect. The modules may be implemented through a hardware circuit, software, or a combination of a hardware circuit and software.

In a design, the apparatus may include a processing module and a communication module. The communication module is configured to perform a sending action and a receiving action that are performed by the decision device in the method described in the first aspect, and the processing module is configured to perform a processing-related action that is performed by the decision device in the method described in the first aspect.

In a design, the apparatus may be a network device, may be an apparatus, a module, a circuit, a chip, or the like disposed in the network device, or may be an apparatus that can be used in combination with the network device.

In a design, the apparatus may be a core network element, may be an apparatus, a module, a circuit, a chip, or the like disposed in a core network element, or may be an apparatus that can be used in combination with the core network element.

According to a fourth aspect, this application provides an apparatus. The apparatus may include modules that are in one-to-one correspondence with the methods/operations/steps/actions described in the second aspect. The modules may be implemented through a hardware circuit, software, or a combination of a hardware circuit and software.

In a design, the apparatus may include a processing module and a communication module. The communication module is configured to perform a sending action and a receiving action performed by the sensing device in the method described in the second aspect, and the processing module is configured to perform a processing-related action performed by the sensing device in the method described in the first aspect or the second aspect.

In a design, the apparatus may be a network device, may be an apparatus, a module, a circuit, a chip, or the like disposed in the network device, or may be an apparatus that can be used in combination with the network device.

In a design, the apparatus may be a terminal device, may be an apparatus, a module, a circuit, a chip, or the like disposed in the terminal device, or may be an apparatus that can be used in combination with the terminal device.

In a design, the apparatus may be a sensor, may be an apparatus, a module, a circuit, a chip, or the like disposed in the sensor, or may be an apparatus that can be used in combination with the sensor.

According to a fifth aspect, an apparatus is provided, including a processor and a storage medium. The storage medium stores instructions, and when the instructions are run by the processor, the method according to any one of the first aspect or the possible implementations of the first aspect is implemented, or the method according to any one of the second aspect or the possible implementations of the second aspect is implemented.

According to a sixth aspect, an apparatus is provided, including a processor. The processor is configured to process data and/or information, so that the method according to any one of the first aspect or the possible implementations of the first aspect is implemented, or the method according to any one of the second aspect or the possible implementations of the second aspect is implemented.

In a design, the apparatus may be a network device, may be an apparatus, a module, a circuit, a chip, or the like disposed in the network device, or may be an apparatus that can be used in combination with the network device.

In a design, the apparatus may be a terminal device, may be an apparatus, a module, a circuit, a chip, or the like disposed in the terminal device, or may be an apparatus that can be used in combination with the terminal device.

In a design, the apparatus may be a sensor, may be an apparatus, a module, a circuit, a chip, or the like disposed in the sensor, or may be an apparatus that can be used in combination with the sensor.

Optionally, the apparatus may further include a memory. The memory is configured to store a program or instructions, and the processor is configured to run the program or the instructions, so that the method according to any one of the first aspect or the possible implementations of the first aspect is implemented, or the method according to any one of the second aspect or the possible implementations of the second aspect is implemented.

Optionally, the apparatus may further include a transceiver circuit or an input/output interface.

According to a seventh aspect, a chip is provided, including a processor. The processor is configured to run a program or instructions, so that the method according to any one of the first aspect or the possible implementations of the first aspect is implemented, or the method according to any one of the second aspect or the possible implementations of the second aspect is implemented.

Optionally, the chip may further include a memory, and the memory is configured to store the program or the instructions. Optionally, the chip may further include a transceiver circuit or an input/output interface.

According to an eighth aspect, a computer-readable storage medium is provided. The computer-readable storage medium includes instructions, and when the instructions are run by a processor, the method according to any one of the first aspect or the possible implementations of the first aspect is implemented, or the method according to any one of the second aspect or the possible implementations of the second aspect is implemented.

According to a ninth aspect, a computer program product is provided, where the computer program product includes computer program code or instructions, and when the computer program code or the instructions are run, the method according to any one of the first aspect or the possible implementations of the first aspect is implemented, or the method according to any one of the second aspect or the possible implementations of the second aspect is implemented.

According to a tenth aspect, a system is provided. The system includes one or a combination of the following apparatuses: the communication apparatus performing any one of the first aspect or the possible implementations of the first aspect, or the communication apparatus performing any one of the second aspect or the possible implementations of the second aspect.

### BRIEF DESCRIPTION OF DRAWINGS

FIG. 1 is a diagram of a possible application framework in a communication system;
FIG. 2 is a diagram of another possible application framework in a communication system;
FIG. 3 is a diagram of a communication system applicable to an embodiment of this application;
FIG. 4 is a diagram of another communication system applicable to an embodiment of this application;
FIG. 5 is an example flowchart of sensing operating modes according to this application;
FIG. 6 is a diagram of another communication system applicable to an embodiment of this application;
FIG. 7 is a diagram of an application scenario to which an embodiment of this application is applicable;
FIG. 8 is an example flowchart of a cell handover method according to this application;
FIG. 9 is another example flowchart of a cell handover method according to this application;
FIG. 10 is another example flowchart of a cell handover method according to this application;
FIG. 11 is another example flowchart of a cell handover method according to this application;
FIG. 12 is another example flowchart of a cell handover method according to this application;
FIG. 13 is another example flowchart of a cell handover method according to this application;
FIG. 14 is another example flowchart of a cell handover method according to this application;
FIG. 15 is an example flowchart of a communication apparatus according to this application; and
FIG. 16 is another example flowchart of a communication apparatus according to this application.

### DESCRIPTION OF EMBODIMENTS

The following describes the technical solutions in embodiments of this application with reference to the accompanying drawings in embodiments of this application.

For ease of clearly describing the technical solutions in embodiments of this application, in embodiments of this application, words such as "first" and "second" are used to distinguish same items or similar items whose functions and roles are basically the same. A person skilled in the art may understand that the terms such as "first" and "second" do not limit a quantity or an execution sequence, and the words such as "first" and "second" do not indicate a definite difference.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, the words such as "example" or "for example" are intended to present a relative concept in a specific manner.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, and the like. The device may alternatively be replaced with an entity, a network entity, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device. It may be understood that the terminal device in this disclosure may be replaced with a first device, the network device may be replaced with a second device, and the terminal device and the network device perform a corresponding communication method in this disclosure.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be mounted in the terminal device or used in combination with the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, an RU, or the like. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, by comparison with the CPRI, a part of downlink and/or uplink baseband functions, for example, for downlink, one or more of precoding (precoding), digital beamforming (beamforming, BF), and inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) and fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), and inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF and fast Fourier transform (FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be mounted in the network device or used in combination with the network device. In embodiments of this application, an example in which the apparatus configured to implement the function of the network device is a network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

To support an AI technology in the wireless network, an AI node may be introduced into the network. The AI node may be an AI network element or an AI module.

Optionally, the AI node may be deployed at one or more of the following locations in the communication system: an access network device, a terminal device, a core network device, and the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, and the like.

It may be understood that, a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

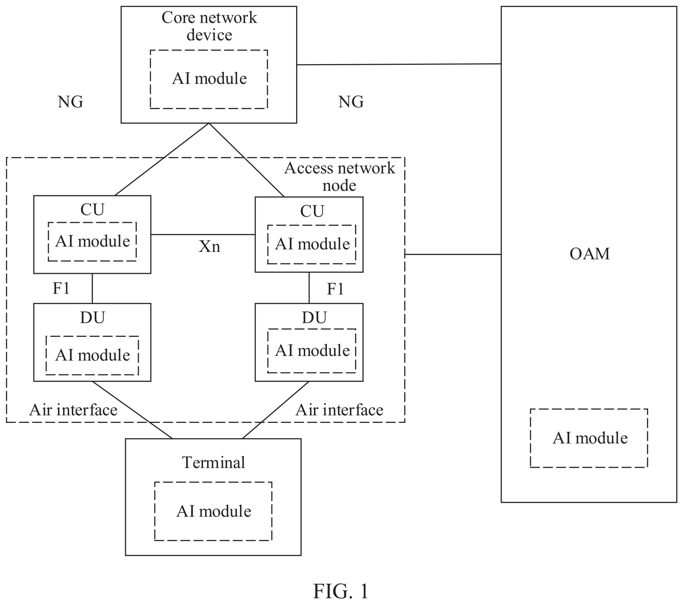

FIG. 1 is a diagram of a possible application framework in a communication system. As shown in FIG. 1, network elements in the communication system are connected through an interface (for example, NG or Xn) or an air interface. One or more AI modules (for clarity, only one AI module is shown in FIG. 1) are deployed on these network element nodes, for example, one or more of the following devices: a core network device, an access network node (RAN node), a terminal, and an OAM. The access network node may be used as an independent RAN node, or may include a plurality of RAN nodes, for example, include a CU and a DU, or include a gNB and/or a ng-eNB. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or a bias in an activation function), an input parameter (for example, a type of the input parameter and/or a dimension of the input parameter), and an output parameter (for example, a type of the output parameter and/or a dimension of the output parameter). The bias in the activation function may also be referred to as a bias of the neural network.

One AI module may have one or more models. One model may obtain an output through inference, and the output includes one or more parameters. Learning processes, training processes, or inference processes of different models may be deployed on different nodes or devices, or may be deployed on a same node or device.

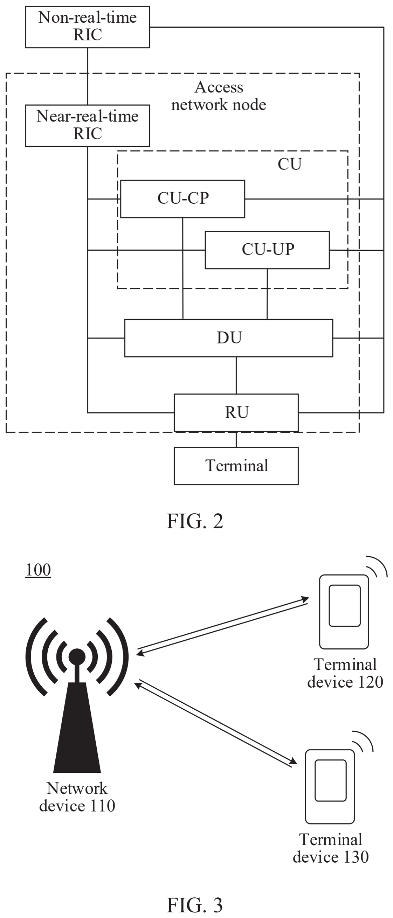

FIG. 2 is a diagram of a possible application framework in a communication system. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. The real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from the RAN node (for example, a CU, a CU-CP, a CU-UP, a DU, and/or an RU) and/or the terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

FIG. 3 is a diagram of a communication system applicable to a method according to an embodiment of this application. As shown in FIG. 3, the communication system 100 may include at least one network device, for example, a network device 110 shown in FIG. 3. The communication system 100 may further include at least one terminal device, for example, a terminal device 120 and a terminal device 130 shown in FIG. 3. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

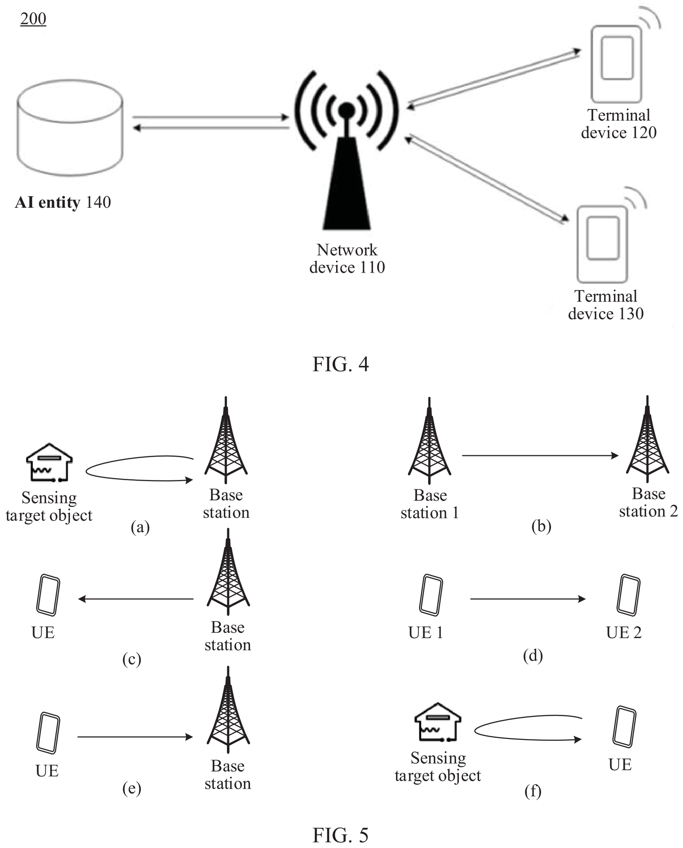

FIG. 4 is a diagram of a communication system applicable to a method according to an embodiment of this application. In comparison with the communication system 100 shown in FIG. 3, the communication system 200 shown in FIG. 4 further includes an AI entity 140.

The AI entity 140 is configured to perform an AI-related operation, for example, construct a training dataset or train an AI model.

In a possible implementation, a network device 110 may send data related to training of the AI model to the AI entity 140, and the AI entity 140 constructs the training dataset and trains the AI model. For example, the data related to the training of the AI model may include data reported by a terminal device. The AI entity 140 may send a result of an operation related to the AI model to the network device 110, and forward the result of the operation related to the AI model to the terminal device via the network device 110. For example, the result of the operation related to the AI model may include at least one of the following: a trained AI model, an evaluation result or a test result for the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that FIG. 4 is merely described by using an example in which the AI entity 140 is directly connected to the network device 110. In another scenario, the AI entity 140 may alternatively be connected to the terminal device. Alternatively, the AI entity 140 may be connected to both the network device 110 and the terminal device. Alternatively, the AI entity 140 may be connected to the network device 110 via a third-party network element. A connection relationship between the AI network element and another network element is not limited in embodiments of this application.

The AI entity 140 may also be disposed as a module in at least one of the following devices: a network device, a terminal device, or a core network element, for example, disposed in the network device 110 or the terminal device shown in FIG. 3. For another example, the AI entity may be located inside an AMF or an LMF.

It should be noted that FIG. 3 and FIG. 4 are merely simplified diagrams of examples for ease of understanding. For example, the communication system may further include another device, for example, may further include a wireless relay device and/or a wireless backhaul device. For another example, the communication system may further include one or more core network elements, which are not shown in FIG. 3 and FIG. 4. During actual application, the communication system may include a plurality of network devices, and may also include a plurality of terminal devices. Quantities of network devices and terminal devices included in the communication system are not limited in embodiments of this application.

The core network element in this application may be configured to implement one or more of the following functions: an access and mobility management function (access and mobility management function, AMF), a session management function (session management function, SMF), a policy control function (policy control function, PCF), a user plane function (user plane function, UPF), a data analysis network element (network data analytics function, NWDAF), a charging function (charging function, CHF), and a unified data management (unified data management, UDM) network element.

The AMF is mainly used for attachment, mobility management, and a tracking area update procedure of the terminal in a mobile network. The access and management network element terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element.

The SMF is mainly used for session management in the mobile network, such as session establishment, modification, and release. For example, the SMF may allocate an internet protocol (internet protocol, IP) address to the terminal, select a user plane network element that provides a packet forwarding function, and the like.

The PCF mainly provides a user subscription data management function, a policy control function, a charging policy control function, quality of service (quality of service, QoS) control, and the like.

The UPF is mainly responsible for processing a user packet, for example, forwarding, charging, or lawful interception.

The NWDAF provides an intelligent analysis service and outputs an analysis result in a form defined in specifications through artificial intelligence and big data analysis. The output analysis result generally includes two forms: statistical analysis of historical data and prediction of future data. A service processing network element adjusts a network based on an output of the NWDAF, and optimizes running of the network. For example, when the service processing network element finds, based on a statistical analysis result output by the NWDAF, that a packet loss rate of a service packet that is being transmitted by the terminal exceeds a threshold, and service experience is affected, the service processing network element takes a corresponding measure, for example, increases a retransmitted packet ratio, or attempts to improve the service experience.

The CHF mainly collects charging events from service processing network elements such as the SMF, AMF, and UPF, and charges a service of a user according to a tariff determined through pre-negotiation.

The UDM network element is used for storing and managing a user terminal network and service subscription data.

The communication system in this application may further include applications (applications), and these applications may be referred to as third-party applications.

The function in this application may also be a network element or an entity. For example, the AMF may also be an AMF network element or an AMF entity.

In embodiments of this application, the network device may be a network device having a sensing function. That the network device has the sensing function may be understood as: When transmitting information on a radio channel, the network device actively perceives and analyzes a channel feature to sense a physical feature of a surrounding environment, so that communication and the sensing function are mutually enhanced. For example, a base station signal is used for sensing surrounding environment information and designing a communication link, to avoid some obstacles and improve communication performance.

In embodiments of this application, the terminal device may be a terminal device having a sensing function. That the terminal device has the sensing function may be understood as: When transmitting information on a radio channel, the terminal device actively perceives and analyzes channel features to sense physical features of a surrounding environment, enabling communication and the sensing function to be mutually enhanced. For example, a base station signal is used for sensing surrounding environment information and designing a communication link, to avoid some obstacles and improve communication performance.

In embodiments of this application, having the sensing function may also be understood as having a capability of executing a sensing task, in other words, being able to execute the sensing task, or being capable of executing the sensing task.

In embodiments of this application, the sensing task may include one or more of several elements such as a sensing object, a sensing operation, and a sensing result. The sensing object may be understood as specific information, a specific signal, or specific data on which the sensing operation is performed, the specific information, the specific signal, or the specific data that is input through the sensing operation, or the like. The sensing operation may be understood as a specific operation performed on the sensing object, for example, collection, measurement, or prediction. The sensing result may be understood as an output obtained through the sensing operation.

Optionally, the sensing task may further include elements such as a source of the sensing object and/or a sensing device. The source of the sensing object refers to what provides the sensing object, and the sensing device is a device that executes the sensing task.

An example in which the terminal device measures a sensing reference signal sent by the network device is used. The terminal device is the sensing device, the network device is the source of the sensing object, the sensing reference signal is the sensing object, measurement is the sensing operation, and a result obtained through measurement is the sensing result.

FIG. 5 is an example diagram of sensing operating modes of network devices and terminal devices. In the sensing operating mode shown in FIG. 5, an example in which the network device is a base station is used.

(a) in FIG. 5 shows a sensing operating mode in which a base station performs self-sending and self-receiving. To be specific, the base station sends a sensing reference signal, and measures an echo that is after the sensing reference signal encounters a sensing target object, to obtain a measurement result. The measurement result may also be referred to as a sensing result. The sensing reference signal may be referred to as a sensing object, and the base station is not only a sensing device, but also a source of the sensing object.

(b) in FIG. 5 shows a sensing operating mode of coordination between base stations. To be specific, the base station 1 sends a sensing reference signal, and the base station 2 measures the sensing reference signal to obtain a measurement result. The measurement result may also be referred to as a sensing result. The sensing reference signal may be referred to as a sensing object, the base station 2 is a sensing device, and the base station 1 is a source of the sensing object.

(c) in FIG. 5 shows a sensing operating mode in which a base station performs sending and a terminal performs receiving. To be specific, the base station sends a sensing reference signal, and the UE measures the sensing reference signal to obtain a measurement result. The measurement result may also be referred to as a sensing result. The sensing reference signal may be referred to as a sensing object, the UE is a sensing device, and the base station is a source of the sensing object.

(d) in FIG. 5 shows a sensing operating mode of coordination between UEs. To be specific, the UE 1 sends a sensing reference signal, and the UE 2 measures the sensing reference signal to obtain a measurement result. The measurement result may also be referred to as a sensing result. The sensing reference signal may be referred to as a sensing object, the UE 2 is a sensing device, and the UE 1 is a source of the sensing object.

(e) in FIG. 5 shows a sensing operating mode in which a terminal performs sending and a base station performs receiving. To be specific, the UE sends a sensing reference signal, and the base station measures the sensing reference signal to obtain a measurement result. The measurement result may also be referred to as a sensing result. The sensing reference signal may be referred to as a sensing object, the base station is a sensing device, and the UE is a source of the sensing object.

(f) in FIG. 5 shows a sensing operating mode in which a UE performs self-sending and self-receiving. To be specific, the UE sends a sensing reference signal, and measures an echo that is after the sensing reference signal encounters a sensing target object, to obtain a measurement result. The measurement result may also be referred to as a sensing result. The sensing reference signal may be referred to as a sensing object, and the UE is not only a sensing device, but also a source of the sensing object.

The sensing reference signal in embodiments of this application may be understood as a signal transmitted for implementing sensing. The sensing, as the name implies, means detecting a status of a surrounding environment, and a location, a direction, a height, a speed, and a distance of an object, and the sensing may further be used for checking a shape or a material of the object, or even checking one or more of an action, a gesture, and the like of a person. However, this is not limited thereto, and other content that can be sensed may also be included.

A reference signal used for measurement in conventional technologies may be reused for the sensing reference signal in embodiments of this application. For example, a reference signal used for cell measurement in the conventional technologies may be reused.

The sensing reference signal in embodiments of this application may alternatively be a newly defined reference signal other than the reference signal in the conventional technologies. For example, a time frequency resource used for the sensing reference signal in this method is different from one or more of a time domain resource, a frequency domain resource, and a sequence resource used for the reference signal in the conventional technologies.

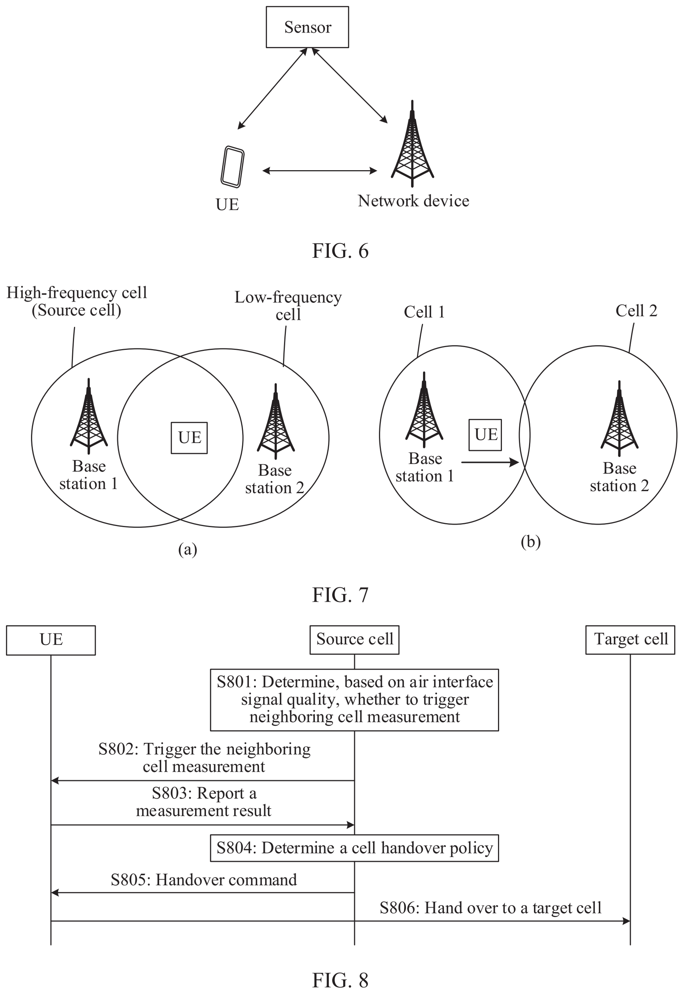

FIG. 6 is a diagram of a communication system applicable to a method according to an embodiment of this application. A difference between the communication system and the system shown in FIG. 3 or FIG. 4 lies in that the communication system further includes one or more sensors.

The sensor (transducer/sensor) in embodiments of this application is a detection apparatus that can sense measured information, and can convert, for output, the sensed information into an electrical signal or information in another needed form according to a specific rule, to satisfy one or more of requirements for information transmission, processing, storage, display, recording, control, and the like.

The sensor in embodiments of this application may include one or more of the following sensors: an image sensor, a temperature sensor, a location sensor, a rainfall sensor, a distance sensor, an energy consumption sensor, a speed sensor, an acceleration sensor, a ray radiation sensor, a vibration sensor, a humidity sensor, a magnetic sensor, a gas sensor, a vacuum sensor, a biosensor, and an optical sensor. The following describes a method or an apparatus in a specific embodiment by using the image sensor, the location sensor, the rainfall sensor, the speed sensor, the acceleration sensor, the gas sensor, or the optical sensor as an example. Another sensor may also be used in a similar method or apparatus.

The sensor may directly communicate with a network device, or may communicate with the network device via a UE.

FIG. 7 is a diagram of an example application scenario of a cell handover method according to this application. In an application scenario shown in (a) in FIG. 7, both a high-frequency cell and a low-frequency cell are included, and a UE is in both a coverage area of the high-frequency cell and a coverage area of the low-frequency cell.

When a current serving cell of the UE is the high-frequency cell provided by a base station 1, if high-frequency channel fading (or strong fading) occurs between the UE and the base station 1 because the UE is blocked (or strongly blocked), or if high-frequency channel strong fading occurs between the UE and the base station 1 due to weather, performance of transmission between the base station 1 and the UE is severely affected. In this case, the serving cell of the UE may be handed over from the high-frequency cell to the low-frequency cell provided by a base station 2. That is, the UE may perform cell handover.

In this embodiment, the high-frequency cell is a cell with a higher communication frequency in the two cells with different communication frequencies, and the low-frequency cell is a cell with a lower communication frequency in the two cells.

In an example, the high-frequency cell may be a cell whose communication frequency is greater than or equal to 6 gigahertz (GHz), and the low-frequency cell may be a cell whose communication frequency is less than 6 GHz.

In an application scenario shown in (b) in FIG. 7, a current serving cell of a UE is a cell 1 provided by a base station 1. When the UE moves along an arrow direction to an edge of a coverage area of the cell 1 and is to enter a coverage area of a cell 2 provided by a base station 2, in other words, when the UE is at the edge of service coverage of the cell 1 and is severely interfered, the serving cell of the UE may be handed over from the high-frequency cell to a low-frequency cell provided by the base station 2. That is, the UE may perform cell handover.

It may be understood that, in FIG. 7, that the high-frequency cell and the low-frequency cell are respectively provided by the base station 1 and the base station 2 is merely an example, and the high-frequency cell and the low-frequency cell may alternatively be provided by a same base station. That the cell 1 and the cell 2 are respectively provided by the base station 1 and the base station 2 is also merely an example, and the cell 1 and the cell 2 may alternatively be provided by a same base station.

It may be understood that the cell handover scenarios shown in FIG. 7 are merely examples, and the technical solutions of this application may be applied to any scenario in which cell handover is performed.

In embodiments of this application, it may be understood that a cell may be understood as a carrier. For example, that a base station provides a high-frequency cell service may be understood as that the base station sends information through a high-frequency carrier. For another example, that a UE is in a coverage area of a cell may be understood as that the UE is in a coverage area of a carrier.

FIG. 8 is a flowchart of a cell handover method. The method shown in FIG. 8 includes S801 to S806.

S801: A source cell determines, based on air interface signal quality of a UE, whether to trigger neighboring cell measurement.

S802: The source cell delivers measurement configuration information to the UE when determining, based on the air interface signal quality of the UE, to trigger the neighboring cell measurement. The measurement configuration information may indicate a measurement resource used for measuring signal quality of the source cell and signal quality of a neighboring cell.

S803: The UE performs measurement based on the measurement configuration information, and reports a measurement result. For example, when the UE finds that the signal quality of the neighboring cell is better than the signal quality of the source cell, the UE may report the event to the source cell.

S804: The source cell determines a cell handover policy based on the measurement result reported by the UE, that is, checks whether the UE can perform handover and determines a target cell of the UE.

S805: The source cell sends a handover command to the UE, to notify the UE of the target cell to which handover can be performed.

S806: The UE initiates a random access procedure, and accesses the target cell, so as to complete a process of handing over from one cell to another cell.

However, in the foregoing cell handover method, the source cell needs to trigger the UE to perform cell measurement only after detecting that the current air interface signal of the UE is poor, and then can determine the cell handover policy only after receiving the cell measurement result reported by the UE, so as to further complete the cell handover. The measurement result needed by the source base station to make a cell handover decision is usually fixed. In other words, measurement results needed by the source cell to implement a cell handover decision function are fixed. Consequently, the source cell cannot implement the cell handover decision function when a measurement result in these measurement results is absent. In other words, the source cell can obtain the cell handover policy only after the UE reports all measurement results needed for implementing the cell handover decision function. This causes long time for obtaining the cell handover policy of the UE, that is, causes a long delay between the air interface signal quality of the UE being poor and obtaining the cell handover policy. Consequently, a cell handover delay of the UE is long, and transmission performance of the UE is poor in long time.

For the foregoing problems, this application proposes new technical solutions. In the technical solutions of this application, an association relationship between measurement information (and/or status information) obtained on a network side and/or a terminal side and a cell handover decision function is used for managing a cell handover function, so as to reduce a handover delay and reduce signaling overheads.

In an example, the measurement information or the status information herein may be a sensing result obtained by executing a sensing task by a sensing device. More flexible cell handover can be implemented by using the sensing result.

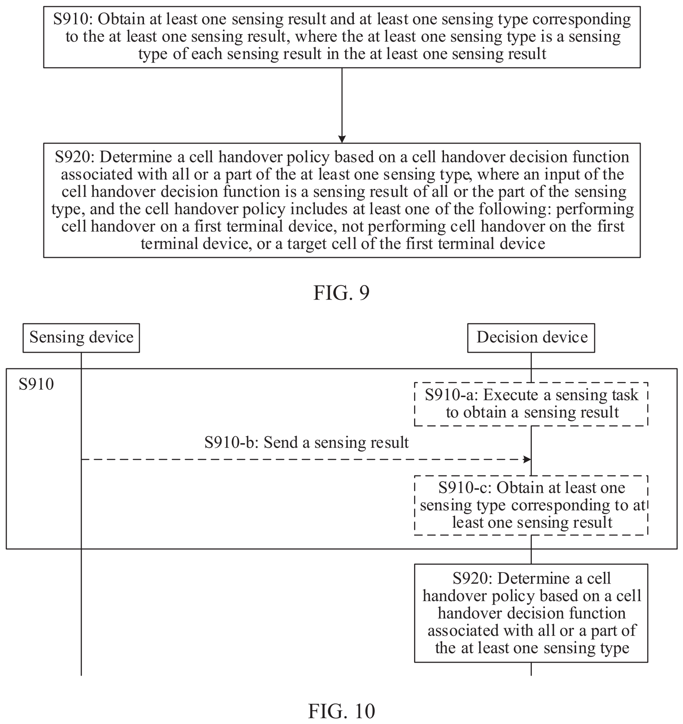

FIG. 9 is an example flowchart of a cell handover method according to this application. The method shown in FIG. 9 includes S910 and S920.

S910: Obtain at least one sensing result and at least one sensing type corresponding to the at least one sensing result, where the at least one sensing type is a sensing type of each sensing result in the at least one sensing result.

In an example, the at least one sensing result may include a sensing result obtained in one or more of the following manners: a result obtained by a terminal device by performing sensing by using a sensing function of the terminal device, a result obtained by a network device by performing sensing by using a sensing function of the network device, and a result obtained by a sensor by performing sensing by using a sensing function of the sensor.

It may be understood that, at least one sensing device that is in one-to-one correspondence with the at least one sensing result may have at least one of the following association relationships: a location association relationship, a service association relationship, and a belonging association relationship.

For example, when the at least one sensing device includes the UE, the network device, and the sensor, the sensor and the UE may have a location association relationship or a belonging association relationship, and the UE and the network device may have a service association relationship.

That the sensor and the UE have a location association relationship may be understood as: A distance between a location of the sensor and a location of the UE is less than or equal to a preset distance threshold. For example, when the sensor is an image sensor, the image sensor may be a camera near the location of the UE.

That the sensor and the UE may have a belonging association relationship may be understood as: The sensor is a sensor in the UE, or the sensor and the UE are components of a same device. For example, the UE is a vehicle, and the sensor may be a speed sensor, a rainfall sensor, or the like in the vehicle. For another example, when the UE is a vehicle-mounted communication device on a vehicle, the sensor may be a speed sensor, a rainfall sensor, or the like on the vehicle.

In this embodiment of this application, the sensing type of the sensing result may be associated with one or more elements included in a sensing task corresponding to the sensing result. In other words, the sensing type of the sensing result may be determined based on one or more of the following information: a type of the sensing device, a type of a sensing object, a type of a sensing operation, and a source of the sensing object that are of the sensing task corresponding to the sensing result, and a type of the sensing result.

In an example, the sensing type of the sensing result may be determined based on the type of the sensing device. For example, when the sensing device of the sensing task corresponding to the sensing result is the image sensor, a location sensor, the rainfall sensor, the speed sensor, an acceleration sensor, a gas sensor, or an optical sensor, the sensing type of the sensing result may be determined based on the type of the sensing device. In this case, the sensing type is an image, a location, a rainfall, a speed, an acceleration, a gas concentration, a gas composition, or a light intensity separately.

In an example, the sensing type of the sensing result may be determined based on the type of the sensing result. For example, when the type of the sensing result is traffic prediction of the network device or a signal interference prediction value of the network device, the sensing type of the sensing result may be determined based on the type of the sensing result. That is, the type of the sensing result is the sensing type of the sensing result. In this case, the sensing type is the traffic prediction value of the network device or the signal interference prediction value of the network device.

In an example, the sensing type of the sensing result may be determined based on the type of the sensing device, the type of the sensing object, and the source of the sensing object. For example, the sensing task corresponding to the sensing result is that the terminal device measures a sensing reference signal sent by the network device to obtain signal strength, the terminal device measures a sensing reference signal sent by the terminal device to obtain signal strength, the terminal device measures a sensing reference signal sent by another terminal device to obtain signal strength, the network device measures a sensing reference signal sent by the network device to obtain signal strength, the network device measures a sensing reference signal sent by another network device to obtain signal strength, or the network device measures a sensing reference signal sent by the terminal device to obtain signal strength. In this case, the sensing type of the sensing result may be determined or distinguished based on the type of the sensing device, the type of the sensing object, the type of the sensing operation, and the source of the sensing object.

In some examples, the sensing type may be determined based on the sensing device, the source of the sensing object, the sensing object, and the sensing operation included in the sensing task, and the sensing result. For example, when the sensing result is signal strength obtained by measuring by the network device the sensing reference signal sent by the another network device, the sensing type is the network device measuring the sensing reference signal sent by the another network device to obtain signal strength. In this example, the sensing type determined based on one or more of the sensing device, the source of the sensing object, the sensing object, and the sensing operation included in the sensing task and the sensing result may be referred to as a type of the sensing task.

In this embodiment of this application, each sensing result has a sensing type corresponding to the sensing result, and sensing types of any two sensing results may be the same or may be different.

In this embodiment of this application, in an example, obtaining the at least one sensing result may include one or more of the following manners: receiving a sensing result from the terminal device, receiving a sensing result from the network device, obtaining a sensing result by using a sensing function, and receiving a sensing result from the sensor.

In this embodiment of this application, in an example, obtaining the at least one sensing type corresponding to the at least one sensing result may include one or more of the following manners: receiving a sensing type from the terminal device (for example, receiving information that indicates the sensing type and that is from the terminal device), receiving a sensing type from the network device (for example, receiving information that indicates the sensing type and that is from the network device), determining a sensing type based on the sensing result, and receiving a sensing type from the sensor (for example, receiving information that indicates the sensing type and that is from the sensor). In other words, not only the sensing result is received, but also the sensing type corresponding to the sensing result is received; or the sensing result is received, and the sensing type is obtained based on a correspondence between the sensing result and the sensing type. In this case, the sensing type is not directly received.

An execution body of the method may be referred to as a decision device. In an example, the decision device may be a core network element, or may be a network device.

S920: Determine a cell handover policy based on a cell handover decision function associated with all or a part of the at least one sensing type, where an input of the cell handover decision function is a sensing result of all or the part of the sensing type, and the cell handover policy includes at least one of the following: performing cell handover on a first terminal device, not performing cell handover on the first terminal device (that is, reserving a source cell of the first terminal device as a serving cell of the first terminal device), or a target cell of the first terminal device.

The cell handover decision function may input the sensing result of the at least one sensing type, and obtain a cell handover decision of the UE through inference based on the input at least one sensing result. The input of the cell handover decision function includes a sensing result of a specific sensing type. In this case, it may be referred to as that the cell handover decision function is associated with the sensing type. Sensing types associated with different cell handover decision functions are usually completely or at least partially different.

This step is explained by using an example as follows: The decision device obtains sensing results of N sensing types, and the decision device may find a cell handover decision function associated with M sensing types in the N sensing types to determine a cell handover policy, where N is a positive integer, and M is a positive integer less than or equal to N.

In an example of the cell handover decision function, the cell handover decision function may input a result of measuring the sensing reference signal by the network device and a result of traffic predicted by the network device, and determine, based on the measurement result and the prediction result, whether a high-load situation occurs in a next scheduling periodicity of the serving network device. If the high-load situation occurs, the cell handover policy may include indication information for performing cell handover on the UE and an identifier of a target cell. It may be understood that the target cell is a low-load cell. High-load herein may be understood as that a quantity of loads is greater than or equal to a load quantity threshold, and low-load may be understood as that the quantity of loads is less than the load quantity threshold; or high-load may be understood as that the quantity of loads is greater than the load quantity threshold, and low-load may be understood as that the quantity of loads is less than or equal to the load quantity threshold. One example of the quantity of loads is a quantity of users, and another example is a data throughput.

In an example of the cell handover decision function, the cell handover decision function may input a result of measuring the sensing reference signal by the network device and an image captured by a camera, and determine, based on the measurement result and the image, whether a blocker exists between the UE and the serving network device. If it is determined that the blocker is sensed, the output cell handover policy may include indication information for performing cell handover on the UE and an identifier of a target cell of the UE.

In an example of the cell handover decision function, the cell handover decision function may input a result of measuring the sensing reference signal by the network device and a light intensity sensed by an optical sensor, and determine, based on the measurement result and the light intensity, whether a blocker exists between the UE and the serving network device. If it is determined that the blocker is sensed, the output cell handover policy may include indication information for performing cell handover on the UE and an identifier of a target cell of the UE.

In another example of the cell handover decision function, the cell handover decision function may input a result of measuring the sensing reference signal by the network device and a speed collected by a speed sensor in the terminal, and determine, based on the measurement result and the speed, whether a blocker exists between the terminal device and the serving network device and whether the terminal speed exceeds a speed threshold. If the blocker exists and the terminal speed exceeds the speed threshold, the cell handover policy may include indication information for performing cell handover on the terminal device and an identifier of a target cell. It may be understood that the target cell may be a low-frequency cell, and no blocker is sensed between the terminal device and the serving network device of the target cell.

In another example of the cell handover decision function, the cell handover decision function may input a result of measuring the sensing reference signal by the terminal device and a speed collected by a speed sensor in the terminal, and determine, based on the measurement result and the speed, whether a blocker exists between the terminal and the serving network device and whether the terminal speed exceeds a speed threshold. If the blocker exists and the speed exceeds the speed threshold, the cell handover policy may include indication information for performing cell handover on the terminal device and an identifier of a target cell. It may be understood that the target cell is a low-frequency cell, and no blocker is sensed between the terminal device and the serving network device of the target cell.

In another example of the cell handover decision function, the cell handover decision function may input a result of measuring the sensing reference signal by the terminal device and an acceleration collected by an acceleration sensor in the terminal, and determine, based on the measurement result and the acceleration, whether a blocker is sensed between the terminal and the serving network device and whether a terminal speed exceeds a speed threshold within preset duration. If it is determined that the blocker is sensed and the terminal is to exceed the speed threshold within the preset duration, the cell handover policy may include indication information for performing cell handover on the terminal and an identifier of a target cell. It may be understood that the target cell may be a low-frequency cell, and no blocker is sensed between the terminal and the serving network device of the target cell.

In another example of the cell handover decision function, the cell handover decision function may input rainfall information sensed by a rainfall sensor in the network device, and determine, based on the rainfall information, whether a rainfall exceeds a rainfall threshold. If it is determined that the rainfall exceeds the rainfall threshold, the cell handover policy may include indication information for performing cell handover on the terminal and an identifier of a target cell. It may be understood that the target cell may be a low-frequency cell. This is because a rainfall exceeding the rainfall threshold may cause a high path loss, leading to an unstable high-frequency connection.

In another example of the cell handover decision function, the cell handover decision function may input a gas concentration and gas composition information sensed by a gas sensor in the network device, and determine, based on the gas concentration and gas composition information, whether the gas concentration in a current weather condition exceeds a concentration threshold. If it is determined that the gas concentration exceeds the concentration threshold, the cell handover policy may include indication information for performing cell handover on the terminal and an identifier of a target cell. It may be understood that the target cell may be a low-frequency cell. This is because exceeding the concentration threshold indicates severe pollution, and the severe pollution may cause a high path loss, leading to an unstable high-frequency connection.

In some implementations, a priority may be set for the cell handover decision function, and the cell handover policy may be determined preferentially based on a cell handover decision function with a higher priority.

For example, a cell handover decision function is associated with a sensing type 1 and a sensing type 2, a cell handover decision function 2 is associated with the sensing type 1 and a sensing type 3, and a cell handover decision function 3 is associated with a sensing type 4 and a sensing type 5. A priority of the cell handover decision function is higher than a priority of the cell handover decision function 2, and the priority of the cell handover decision function 2 is higher than a priority of the cell handover decision function 3. If obtaining a sensing result 1 of the sensing type 1, a sensing result 2 of the sensing type 2, a sensing result 3 of the sensing type 3, a sensing result 4 of the sensing type 4, and a sensing result 5 of the sensing type 5, the decision device may determine, based on the foregoing priorities, the cell handover policy by using only the cell handover decision function 1 and based on the sensing result 1 and the sensing result 2.

Optionally, the priority of the cell handover decision function may be pre-specified in a communication protocol, may be preset in the decision device, or may be obtained through negotiation between a plurality of devices in a communication system.

Optionally, the priority of the cell handover decision function may be set based on at least one of the following factors: a priority of the associated sensing type, a priority of accuracy of the obtained cell handover policy determined by using the sensing result of the associated sensing type, or logical complexity of determining the cell handover decision by using the sensing result of the associated sensing type.

For example, higher accuracy of the obtained cell handover policy determined by using the sensing result of the associated sensing type indicates a higher priority of the cell decision function; and lower logical complexity of determining the cell handover policy by using the sensing result of the associated sensing type indicates a higher priority of the cell handover decision function.

In this method, after obtaining the sensing result, the decision device determines the cell handover decision function based on the sensing type of the sensing result. Therefore, regardless of whether a quantity of sensing results obtained by the decision device is large or small, and regardless of the sensing type of the sensing result obtained by the decision device, provided that any subset of all sensing types corresponding to the sensing results is associated with a cell handover decision function, in other words, provided that a sensing type of a sensing result input by at least one cell handover decision function matches the any subset of all the sensing types corresponding to the sensing results, the cell handover policy of the UE can be obtained based on the cell handover decision function and a sensing result of a sensing type in the subset.

In this way, flexibility of obtaining the cell handover policy of the UE can be achieved, thereby implementing flexibility of cell handover. In addition, this helps reduce time for waiting for excessive sensing results, thereby helping reduce a delay of obtaining the cell handover policy, and further helping reduce a cell handover delay.

In some implementations, transmission of the sensing reference signal may not be performed by using pilot resources. In this implementation, the pilot resources can be saved.

In some implementations, if a corresponding cell handover decision function can be associated based only on a sensing result reported by the sensor (for example, a sensing result reported by an image sensor), and a cell handover policy is obtained based on the cell handover decision function, air interface pilot resources do not need to be consumed to perform neighboring cell measurement, thereby reducing signaling overheads.

FIG. 10 is another example flowchart of a cell handover method according to this application. As shown in FIG. 10, S910 may include S910-b and S910-c, and may further include S910-a. For example, when a decision device has a sensing function, S910 may further include S910-a. In an example, the decision device in FIG. 10 may be a network device or a core network element, and a sensing device may include one or more of the following devices: a terminal device, a network device, and a sensor.

S910-a: The decision device executes a sensing task to obtain a sensing result.

For example, when the decision device is the network device, the network device may measure an echo of a sensing reference signal sent by the network device to obtain a sensing result, the network device may measure a sensing reference signal sent by another network device to obtain a sensing result, the network device may measure a sensing reference signal sent by the terminal device to obtain a sensing result, the network device may predict traffic of the network device to obtain a traffic prediction value, or the network device may predict interference of the network device to obtain an interference prediction value.

S910-b: The sensing device sends a sensing result to the decision device. Correspondingly, the decision device receives the sensing result from the sensing device.

In an example, after measuring an echo of a sensing reference signal sent by the terminal device to obtain a sensing result, measuring a sensing reference signal sent by another terminal device to obtain a sensing result, or measuring a sensing reference signal sent by the network device to obtain a sensing result, the terminal device sends the sensing result to the network device or the core network element.

In an example, after collecting a sensing result, the sensor sends the sensing result to the network device or the core network element. For example, after capturing an image, a camera sends the image to the network device or the core network element. For another example, after collecting a moving speed of the UE, a speed sensor in the UE sends the moving speed to the network device or the core network element. For another example, after collecting a gas composition and a gas concentration in an environment in which the UE is located, a gas sensor sends indication information of the gas composition and indication information of the gas concentration to the network device or the core network element. For another example, after collecting a rainfall in an environment in which the UE is located, a rainfall sensor sends the rainfall to the network device or the core network element. For another example, after collecting a light intensity in an environment in which the UE is located, a photosensor sends the light intensity to the network device or the core network element. For another example, after collecting an acceleration of the UE, an acceleration sensor in the UE sends the acceleration to the network device or the core network element.

S910-c: The decision device determines a sensing type of at least one obtained sensing result.

In an example, the sensing device not only sends the sensing result to the decision device, but also sends the sensing type of the sensing result to the decision device. Optionally, the sensing result and the sensing type may be carried in a same message or same signaling. In this case, the decision device may obtain, based on information reported by the sensing device, the sensing type of the sensing result reported by the sensing device.

In another example, the sensing device does not report the type of the sensing result. In this case, the decision device may obtain the type of the sensing result based on other information.

For example, the type of the sensing result is determined based on a type of the sensing device that reports the sensing result. In a more specific example, if the sensing result is reported by the camera, it may be determined that the type of the sensing result is the image.

For other related content in this embodiment, refer to the foregoing content. For example, for a manner of determining the sensing type of the sensing result, refer to the foregoing content. Details are not described herein again.

It may be understood that dashed lines in the accompanying drawing corresponding to each embodiment of this application represent optional content in the embodiment.

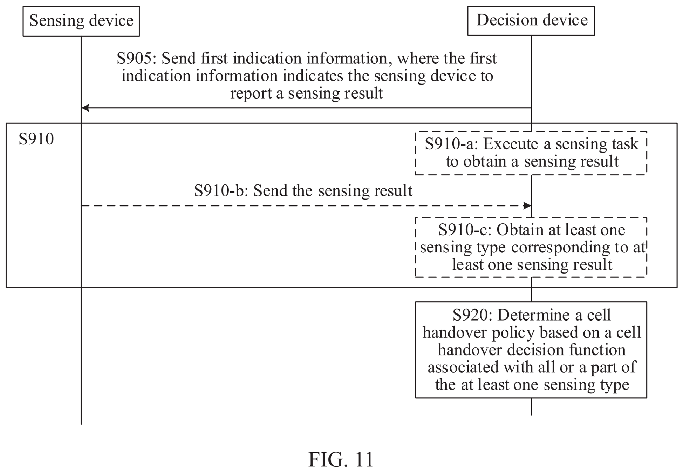

FIG. 11 is another example flowchart of a cell handover method according to this application. As shown in FIG. 11, the cell handover method in this embodiment of this application may further include S905. To be specific, before obtaining a sensing result, a decision device sends first indication information to a sensing device, where the first indication information indicates the sensing device to report the sensing result. For content of S905, refer to the related content in the present invention. Details are not described herein again.

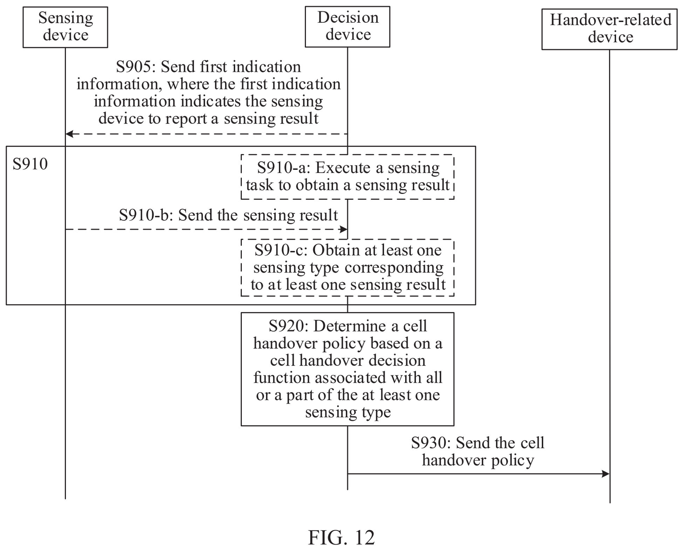

FIG. 12 is another example flowchart of a cell handover method according to this application. As shown in FIG. 12, the cell handover method in this embodiment of this application may further include S930. To be specific, a decision device sends a cell handover policy to a handover-related device. The handover-related device may include at least one of a UE, a source network device of the UE, or a destination network device of the UE. The decision device may be a network device of the UE or a core network element.

For example, the decision device is the network device of the UE, and the handover-related device is the UE. In this case, the network device of the UE sends the cell handover policy to the UE.

For another example, the decision device is the core network element, and the handover-related device is the source network device of the UE. In this case, the core network element sends the cell handover policy to the source network device of the UE, so that the source network device sends the cell handover policy to the UE.

In some examples, the handover-related device may be one or more of sensing devices. For example, the decision device receives a sensing result from the UE, and determines and obtains the cell handover policy of the UE based on the sensing result. In this case, the handover-related device is the sensing device.

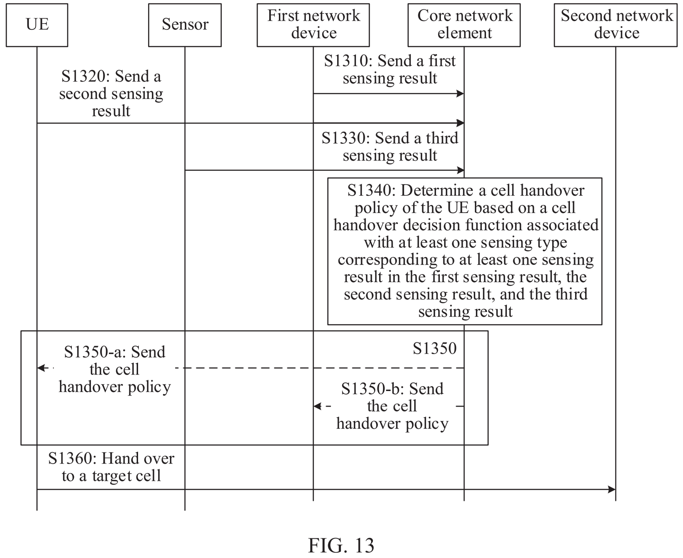

FIG. 13 shows an example procedure of a cell handover method according to an embodiment of this application. The method shown in FIG. 13 includes S1310, S1320, S1330, and S1340. Optionally, the method may further include S1350. Optionally, the method may further include S1360. S1350 may include S1350-a and/or S1350-b. In the method, a core network element is a decision device, and a sensing device may include one or more of the following devices: a UE, a sensor, and a first network device.

S1310: The first network device sends a first sensing result to the core network element. Correspondingly, the core network element receives the first sensing result from the first network device.

In an example, the first network device may be a network device corresponding to a source cell of the UE.

In an example, the first sensing result may include at least one of the following: a result obtained by the first network device from measuring a sensing reference signal sent by the first network device, a result obtained by the first network device from measuring a sensing reference signal sent by a second network device, a result obtained by the first network device from measuring a sensing reference signal sent by the UE, a result of traffic of the first network device predicted by the first network device, or a result of interference experienced by the first network device predicted by the first network device.

In an example, the first network device may further send a sensing type of the first sensing result to the core network element.

S1320: The UE sends a second sensing result to the core network element. Correspondingly, the core network element receives the second sensing result from the UE.

In an example, the second sensing result may include at least one of the following: a result obtained by the UE from measuring a sensing reference signal sent by the first network device, a result obtained by the UE from measuring a sensing reference signal sent by the UE, a result obtained by the UE from measuring a sensing reference signal sent by another UE, or a sensing result collected by a sensor in the UE.

In some implementations, the UE may send the second sensing result to the core network element via the first network device.

In an example, the UE may further send a sensing type of the second sensing result to the core network element.

S1330: The sensor sends a third sensing result to the core network element. Correspondingly, the core network element receives the third sensing result from the sensor.

The third sensing result may be a result obtained by executing a sensing task by the sensor.

The sensor may include one or more of an image sensor, a location sensor, a rainfall sensor, a speed sensor, a thermos sensor, an acceleration sensor, a gas sensor, and an optical sensor.

In an example, the sensor may further send the sensing type of the third sensing result to the core network element.

S1340: The core network element determines a cell handover policy of the UE based on a cell handover decision function associated with at least one sensing type corresponding to at least one sensing result in the first sensing result, the second sensing result, and the third sensing result.

It may be understood that, at least one sensing device that is in one-to-one correspondence with the at least one sensing result may have at least one of the following association relationships: a location association relationship, a service association relationship, and a belonging association relationship.

For example, when the at least one sensing device includes the UE, the network device, and the sensor, the sensor and the UE may have a location association relationship or a belonging association relationship, and the UE and the network device may have a service association relationship.

That the sensor and the UE have a location association relationship may be understood as: A distance between a location of the sensor and a location of the UE is less than or equal to a preset distance threshold. For example, when the sensor is the image sensor, the image sensor may be a camera near the location of the UE.

That the sensor and the UE may have a belonging association relationship may be understood as: The sensor is a sensor in the UE, or the sensor and the UE are components of a same device. For example, the UE is a vehicle, and the sensor may be a speed sensor, a rainfall sensor, or the like in the vehicle. For another example, when the UE is a vehicle-mounted communication device on a vehicle, the sensor may be a speed sensor, a rainfall sensor, or the like on the vehicle.

In this embodiment of this application, in this embodiment, for content of obtaining the sensing type, refer to the related content in S920. Details are not described herein again.

It may be understood that the embodiment shown in FIG. 13 is merely an example. In some embodiments corresponding to actual scenarios, only some steps in S1310, S1320, and S1330 may be included. For example, only the UE and the sensor report a sensing result. For another example, only the network device and the sensor report a sensing result. For another example, only the network device reports a sensing result. For another example, only the terminal device reports a sensing result.

In an example, the core network element includes a first-cell handover decision function and a second-cell handover decision function. An input of the first-cell handover decision function is a sensing result of a first sensing type and a sensing result of a third sensing type, and an input of the second-cell handover decision function is a sensing result of a fourth sensing type and the sensing result of the first sensing type. Provided that the sensing result obtained by the core network element includes the sensing result of the first sensing type and the sensing result of the third sensing type, the core network element may perform the following step: inputting the first sensing result and the third sensing result into the first-cell handover decision function, to obtain the cell handover policy of the UE.

For example, an input of the first-cell handover decision function is a result of measuring the sensing reference signal by the network device and an image captured by the camera, and an input of the second-cell handover decision function is the result of measuring the sensing reference signal by the network device and a rainfall measured by a rain gauge. In this case, when the first sensing result received by the core network element from the network device is the result of measuring the sensing reference signal by the network device, and the third sensing result received from the UE is the rainfall measured by the rain gauge, the core network element may input the first sensing result and the third sensing result into the first-cell handover decision function, to obtain the cell handover policy of the UE.

In a more specific example, when a location of the UE is obtained, for example, when the location of the UE is obtained based on an angle of a current serving beam of the UE, if the first-cell handover decision function determines, based on the result of measuring the sensing reference signal by the network device, that a large metal blocker exists in the location and determines that the rainfall is greater than a rainfall threshold, the first-cell handover decision function may output the following cell handover policy: indication information for performing cell handover on the UE and a target cell of the UE (for example, an identifier of the target cell of the UE).

For another example, the first sensing type is measuring the sensing reference signal by the network device, a second sensing type is measuring the sensing reference signal by the terminal device, the third sensing type is collecting a speed by the speed sensor, an input of the first-cell handover decision function is a result of measuring the sensing reference signal by the network device and an image captured by the camera, and an input of the second-cell handover decision function is a result of measuring the sensing reference signal by the terminal device and a speed collected by the speed sensor associated with the UE. In this case, the core network element may input the first sensing result and the third sensing result into the first-cell handover decision function when obtaining the first sensing result and the third sensing result, to obtain the cell handover policy of the UE.

In a more specific example, when a location of the UE is obtained, for example, when the location of the UE is obtained based on an angle of a current serving beam of the UE, if the first-cell handover decision function determines, based on the first sensing result, that a large metal blocker exists in the location and determines, based on the third sensing result, that a moving speed of the UE exceeds a threshold, the first-cell handover decision function may output the following cell handover policy: performing cell handover on the UE (that is, an indication of performing cell handover on the UE) and a target cell of the UE (for example, an identifier of the target cell of the UE), where the target cell is a low-frequency cell for the second network device.

For another example, the first sensing type is the network device predicting service traffic of the network device, a second sensing type is measuring the sensing reference signal by the network device, the third sensing type is sensing performed by the sensor, an input of the first-cell handover decision function is a result of traffic of the network device predicted by the network device and a result of measuring the sensing reference signal by the network device, and an input of the second-cell handover decision function is a result of predicted interference experienced by the network device and a result of measuring the sensing reference signal by the network device. In this case, the core network element may input the first sensing result and the second sensing result into the first-cell handover decision function when obtaining the first sensing result and the second sensing result, to obtain the cell handover policy of the UE.

In a more specific example, if the first-cell handover decision function determines, based on the first sensing result, that a load peak occurs on the first network device in a next scheduling periodicity, and determines, based on the second sensing result, that the UE is at an edge of the source cell, the first-cell handover decision function may input the following cell handover policy: performing cell handover on the UE, and a target cell of the UE. It may be understood that the target cell may be a low-load cell for the second network device.

In an example, the core network element includes a first-cell handover decision function and a second-cell handover decision function, a priority of the first-cell handover decision function is higher than a priority of the second-cell handover decision function, an input of the first-cell handover decision function is a sensing result of a first sensing type and a sensing result of a third sensing type, and an input of the second-cell handover decision function is a sensing result of a second sensing type and the sensing result of the first sensing type. The core network element obtains the sensing result of the first sensing type, the sensing result of the second sensing type, and the sensing result of the third type, and the core network element may perform the following step: inputting the first sensing result and the third sensing result into the first-cell handover decision function, to obtain the cell handover policy of the UE.

For example, an input of the first-cell handover decision function is a result of measuring the sensing reference signal by the network device and an image captured by the camera, an input of the second-cell handover decision function is a result of measuring the sensing reference signal by the network device and a rainfall measured by a rain gauge, and a priority of the camera is higher than a priority of the rain gauge, in other words, the priority of the first-cell handover decision function is higher than the priority of the second-cell handover decision function. In this case, when receiving, from the network device, the result of measuring the sensing reference signal by the network device, receiving, from the UE, the rainfall measured by the rain gauge, and receiving the image from the camera, the core network element determines the cell handover policy based on the first-cell handover decision function.

In an example, the first network device and the second network device may be a same network device.

S1350-a: The core network device sends a handover command to the UE, where the handover command indicates the cell handover policy, that is, indicates the UE to hand over to the target cell.

S1350-b: The core network device sends a handover command to the first network device, where the handover command indicates the cell handover policy; and the first network device sends the handover command to the UE, to indicate the UE to hand over to the target cell.

S1360: The UE hands over to the target cell for the second network device based on the handover command.

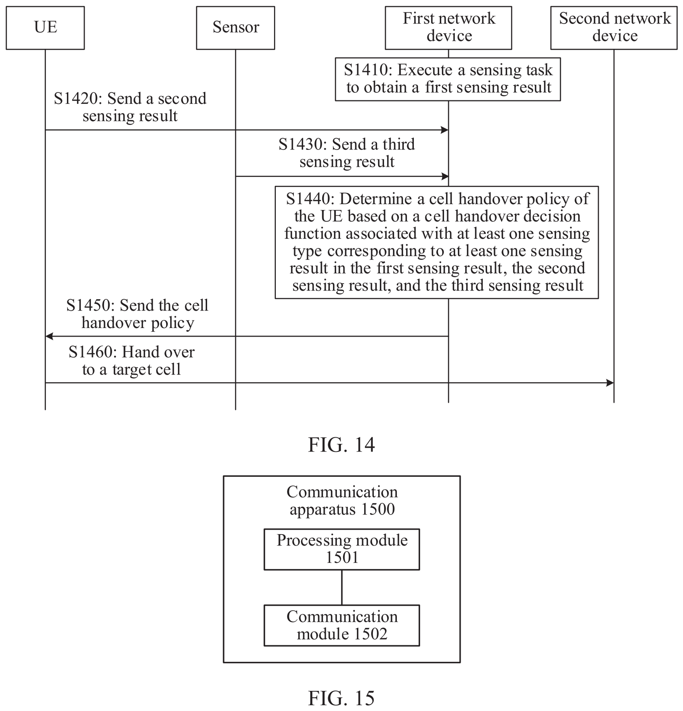

FIG. 14 shows another example procedure of a cell handover method according to this application. The method shown in FIG. 14 includes S1410, S1420, S1430, S1440, S1450, and S1460. In the method, a first network device is a decision device, and a sensing device may include one or more of the following devices: a UE, a sensor, and a first network device.

S1410: The first network device executes a sensing task to obtain a first sensing result.

In an example, the first network device may be a network device corresponding to a source cell of the UE.

In an example, the first sensing result may include at least one of the following: a result obtained by the first network device from measuring a sensing reference signal sent by the first network device, a result obtained by the first network device from measuring a sensing reference signal sent by a second network device, or a result obtained by the first network device from measuring a sensing reference signal sent by the UE.

S1420: The UE sends a second sensing result to the first network device. Correspondingly, the first network device receives the second sensing result from the UE.

In an example, the second sensing result may include at least one of the following: a result obtained by the UE from measuring a sensing reference signal sent by the first network device, a result obtained by the UE from measuring a sensing reference signal sent by the UE, or a result obtained by the UE from measuring a sensing reference signal sent by another terminal and/or the second network device.

In an example, the UE may further send a sensing type of the second sensing result to the first network device.

S1430: The sensor sends a third sensing result to the first network device. Correspondingly, the first network device receives the third sensing result from the sensor.

The third sensing result may be a result obtained by executing a sensing task by the sensor.

The sensor may include one or more of an image sensor, a temperature sensor, a location sensor, a rainfall sensor, a distance sensor, an energy consumption sensor, a speed sensor, an acceleration sensor, a ray radiation sensor, a vibration sensor, a humidity sensor, a magnetic sensor, a gas sensor, a vacuum sensor, a biosensor, and an optical sensor.

In an example, the sensor may further send a sensing type of the first sensing result to the first network device.

S1440: The first network device determines a cell handover policy of the UE based on a cell handover decision function associated with at least one sensing type corresponding to at least one sensing result in the first sensing result, the second sensing result, and the third sensing result.

It may be understood that the embodiment shown in FIG. 14 is merely an example. In some embodiments corresponding to actual scenarios, only some steps in S1410, S1420, and S1430 may be included. For example, only the UE and the sensor report a sensing result. For another example, only the network device obtains a sensing result and the sensor reports a sensing result. For another example, only the UE or the sensor reports a sensing result.

For this step, refer to S1340. Details are not described herein again.

S1450: The first network device sends a handover command to the UE, where the handover command indicates the cell handover policy, that is, indicates the UE to hand over to a target cell.

S1460: The UE hands over to the target cell for the second network device based on the handover command.

In the method shown in the foregoing embodiment of this application, after obtaining the sensing result, the decision device determines the cell handover decision function based on the sensing type of the sensing result. Therefore, regardless of whether a quantity of sensing results obtained by the decision device is large or small, and regardless of the sensing type of the sensing result obtained by the decision device, provided that any subset of all sensing types corresponding to the sensing results is associated with a cell handover decision function, in other words, provided that a sensing type of a sensing result input by at least one cell handover decision function matches the any subset of all the sensing types corresponding to the sensing results, the cell handover policy of the UE can be obtained based on the cell handover decision function and a sensing result of a sensing type in the subset.

In this way, flexibility of obtaining the cell handover policy of the UE can be achieved, thereby implementing flexibility of cell handover. In addition, this helps reduce time for waiting for excessive sensing results, thereby helping reduce a delay of obtaining the cell handover policy, and further helping reduce a cell handover delay.

It should be understood that, in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a device A sends information A to a device B" may be understood as that a destination end of the information A or an intermediate device in a transmission path between the device A and the destination end is the device B, and may include directly or indirectly sending the information to the device B. That "the device B receives the information A from the device A" may be understood as that a source end of the information A or an intermediate device in a transmission path between the device B and the source end is the device A, and may include directly or indirectly receiving the information from the device A. The information may undergo necessary processing, for example, a format change, between the source end for sending the information and the destination end. However, the destination end may understand valid information from the source end. Similar descriptions in this application may be understood similarly, and details are not described herein.

FIG. 15 is a diagram of a structure of a communication apparatus according to an embodiment of this application. As shown in FIG. 15, the apparatus 1500 may include a processing module 1501 and a communication module 1502.

In a first example, the apparatus 1500 may be configured to implement the communication method implemented by the decision device in any one of embodiments shown in FIG. 9 to FIG. 14. For example, the processing module 1501 is configured to implement processing-related steps such as determining and checking performed by the decision device in any one of embodiments shown in FIG. 9 to FIG. 14, and the communication module 1502 is configured to implement steps such as sending and/or receiving performed by the decision device in any one of embodiments shown in FIG. 9 to FIG. 14.

In a second example, the apparatus 1500 may be configured to implement the communication method implemented by the sensing device in any one of embodiments shown in FIG. 9 to FIG. 14. For example, the processing module 1501 is configured to implement processing-related steps such as determining and checking performed by the sensing device in any one of embodiments shown in FIG. 9 to FIG. 14, and the communication module 1502 is configured to implement steps such as sending and/or receiving performed by the sensing device in any one of embodiments shown in FIG. 9 to FIG. 14.

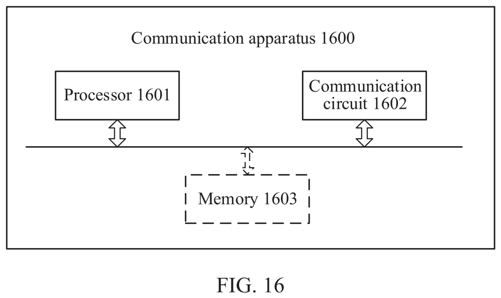

FIG. 16 is a diagram of a structure of a communication apparatus according to another embodiment of this application. As shown in FIG. 16, the apparatus 1600 includes a processor 1601 and a communication circuit 1602. The processor 1601 and the communication circuit 1602 are coupled to each other. It may be understood that the communication circuit 1602 may be a transceiver or an input/output interface. Optionally, the apparatus 1600 may further include a memory 1603, configured to: store instructions executed by the processor 1601, store input data needed for running the instructions by the processor 1601, or store data generated after the processor 1601 runs the instructions. It may be understood that the memory 1603 may be located outside the processor 1601, or may be located inside the processor 1601.

In an example, the processor 1601 is configured to implement a function of the processing module 1501, and the communication circuit 1602 is configured to implement a function of the communication module 1502.

The apparatus 1600 may be a communication device, or may be a chip used in the communication device. For example, the apparatus 1600 may be a UE or a chip used in the UE, may be a network device or a chip used in the network device, may be a core network device or a chip used in the core network element, or may be a sensor or a chip used in the sensor. It may be understood that, when the apparatus 1600 is the UE, the network device, or the sensor, the communication circuit 1602 may be a transceiver. When the apparatus 1600 is the core network element or the sensor, the communication circuit 1602 may be a transceiver circuit. When the apparatus 1600 is the chip, the communication circuit 1602 may be an interface circuit.

Some embodiments of this application further provide a computer program product. When the computer program product runs on a processor, the method implemented by the decision device in any one of the foregoing embodiments may be implemented, or the method implemented by the sensing device in any one of the foregoing method embodiments may be implemented.

Some embodiments of this application further provide a computer-readable storage medium. The computer-readable storage medium includes computer instructions. When the computer instructions are run on a processor, the method implemented by the decision device in any one of the foregoing embodiments may be implemented, or the method implemented by the sensing device in any one of the foregoing method embodiments may be implemented.

In some embodiments of this application, a communication system is further provided. The system may implement the method implemented by the sensing device and the decision device in any one of the foregoing embodiments.

It may be understood that the processor in embodiments of this application may be the following components or all or some circuits configured to perform a processing function in the following components: a central processing unit (central processing unit, CPU); or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A cell handover method, wherein the method comprises:
obtaining at least one sensing result and at least one sensing type corresponding to the at least one sensing result, wherein the at least one sensing type is a sensing type of each sensing result in the at least one sensing result; and
determining a cell handover policy based on a cell handover decision function associated with all or a part of the at least one sensing type, wherein an input of the cell handover decision function is a sensing result of all or the part of the sensing type, and the cell handover policy comprises at least one of the following: performing cell handover on a first terminal device, not performing cell handover on the first terminal device, or a target cell of the first terminal device.

2. The method according to claim 1, wherein the sensing type of each sensing result is determined based on at least one of the following information of a sensing task corresponding to each sensing result: a sensing device, a sensing object, a sensing operation, or a source of the sensing object.

3. The method according to claim 1 or 2, wherein each sensing result is a sensing result obtained based on one of the following sensing tasks: the first terminal device measures a sensing reference signal sent by a network device, the first terminal device measures a sensing reference signal sent by the first terminal device, the first terminal device measures a sensing reference signal sent by another terminal device, a first network device measures a sensing reference signal sent by the first network device, the first network device measures a sensing reference signal sent by another network device, or the first network device measures a sensing reference signal sent by the first terminal device, wherein
the sensing type of each sensing result is a type of a sensing task corresponding to each sensing result.

4. The method according to any one of claims 1 to 3, wherein each sensing result is a sensing result obtained by executing a sensing task by one of the following sensors: an image sensor, a location sensor, a rainfall sensor, a speed sensor, an acceleration sensor, a gas sensor, and an optical sensor, wherein
the sensing type of each sensing result is a type of a sensing device corresponding to each sensing result.

5. The method according to any one of claims 1 to 4, wherein when each sensing result is traffic prediction of a network device, the sensing type of each sensing result is a traffic prediction flow value of the network device; or when each sensing result is interference prediction of the network device, the sensing type of each sensing result is an interference prediction value of the network device.

6. The method according to any one of claims 1 to 5, wherein the method further comprises:
sending the cell handover policy.

7. The method according to any one of claims 1 to 6, wherein the method comprises:
sending first indication information, wherein the first indication information indicates a target sensing device to report a sensing result, and the target sensing device comprises at least one sensing device; and
the obtaining the at least one sensing result comprises:
receiving a sensing result from each sensing device in the target sensing device.

8. The method according to claim 7, wherein the first indication information comprises a type of the target sensing device.

9. The method according to any one of claims 1 to 8, wherein the cell handover decision function is one of a plurality of cell handover decision functions, the plurality of cell handover decision functions are in one-to-one correspondence with a plurality of sensing type sets, and a sensing type set corresponding to each cell handover decision function in the plurality of cell handover decision functions comprises one or more sensing types.

10. The method according to claim 9, wherein the at least one sensing type comprises M sensing types, M is a positive integer greater than 1, N sensing types in the M sensing types are associated with a first-cell handover decision function, N is a positive integer less than or equal to M, T sensing types in the M sensing types are associated with a second-cell handover decision function, T is a positive integer less than or equal to M, at least one of the N sensing types is different from the M sensing types, and a priority of the first-cell handover decision function is higher than a priority of the second-cell handover decision function; and
the determining the cell handover policy based on the cell handover decision function associated with all or the part of the at least one sensing type comprises:
determining the cell handover policy based on a sensing result that belongs to the N sensing types and that is in the at least one sensing result and the first-cell handover decision function.

11. A cell handover method, applied to a first sensing device, wherein the method comprises:
receiving first indication information, wherein the first indication information indicates a target sensing device to report a sensing result, and the target sensing device comprises at least one sensing device; and
when the first sensing device is the target sensing device, sending a sensing result obtained by executing a sensing task by the first sensing device.

12. The method according to claim 11, wherein the first indication information comprises a type of the target sensing device.

13. The method according to claim 11 or 12, wherein the first sensing device is one of the following sensors: an image sensor, a location sensor, a rainfall sensor, a speed sensor, an acceleration sensor, a gas sensor, and an optical sensor.

14. The method according to any one of claims 11 to 13, wherein the method further comprises:
sending second indication information, wherein the second indication information indicates a sensing type of the sensing result sent by the first sensing device.

15. A communication apparatus, comprising a function module configured to implement the method according to any one of claims 1 to 10.

16. A communication apparatus, comprising a function module configured to implement the method according to any one of claims 11 to 14.

17. A communication apparatus, comprising a memory and a processor, wherein
the memory is configured to store program instructions; and
the processor is configured to execute the program instructions in the memory to implement the method according to any one of claims 1 to 10 or any one of claims 11 to 14.

18. A computer-readable storage medium, wherein the computer-readable storage medium stores program code to be executed by a computer, and the program code comprises instructions used for implementing the method according to any one of claims 1 to 10 or any one of claims 11 to 14.
